Europäisches Patentamt

European Patent Office

Office européen des brevets

(19)

(11) **EP 0 711 471 B1**

(12) **EUROPÄISCHE PATENTSCHRIFT**

(45) Veröffentlichungstag und Bekanntmachung des Hinweises auf die Patenterteilung:
**29.01.1997 Patentblatt 1997/05**

(21) Anmeldenummer: **93915662.6**

(22) Anmeldetag: **26.07.1993**

(51) Int Cl.6: **H02P 7/628**, H02M 7/5387

(86) Internationale Anmeldenummer:
**PCT/DE93/00657**

(87) Internationale Veröffentlichungsnummer:
**WO 95/03649 (02.02.1995 Gazette 1995/06)**

(54) **VERFAHREN UND VORRICHTUNG ZUR KOMPENSATION EINER FEHLERSPANNUNG BEI EINEM PULSWECHSELRICHTER**

PROCESS AND DEVICE FOR COMPENSATING A FAULT VOLTAGE AT A PULSE-CONTROLLED INVERTER

PROCEDE ET DISPOSITIF POUR COMPENSER UNE TENSION DE DEFAUT DANS UN ONDULEUR A IMPULSIONS

(84) Benannte Vertragsstaaten:
**AT CH DE FR LI SE**

(43) Veröffentlichungstag der Anmeldung:
**15.05.1996 Patentblatt 1996/20**

(73) Patentinhaber: **SIEMENS AKTIENGESELLSCHAFT**
**80333 München (DE)**

(72) Erfinder:
- **HOLL, Eugen**
  **D-90765 Fürth (DE)**
- **SCHIERLING, Hubert**
  **D-91052 Erlangen (DE)**
- **WALTER, Andreas**
  **D-91058 Erlangen (DE)**

(56) Entgegenhaltungen:
**EP-A- 0 116 706        EP-A- 0 175 154**
**EP-A- 0 533 403**

**Beschreibung**

Die Erfindung bezieht sich auf ein Verfahren und eine Vorrichtung zur Kompensation einer Fehlerspannung eines eine Induktionsmaschine speisenden Pulswechselrichters, wobei diese Fehlerspannung auf eine Verriegelungszeit und auf Durchlaßspannungen von Stromrichterventilen dieses Pulswechselrichters zurückzuführen ist.

Bei drehzahlveranderbaren Antrieben von Drehfeldmaschinen wird die Amplitude und die Frequenz des Drehfeldes vorwiegend mit einem Zweipunkt-Pulswechselrichter erzeugt. Dieser wandelt die an den Eingangsklemmen anliegende Gleichspannung in ein dreiphasiges sinusförmiges Drehspannungssystem, welches die Drehfeldmaschine speist. Die Steuerung des Zweipunkt-Pulswechselrichters wird vorwiegend mit einem Spannungssteuersatz realisiert, der die Ansteuerpulse für den Zweipunkt-Pulswechselrichter erzeugt. Um das gleichzeitige Einschalten der Stromrichterventile einer Phase zu verhindern, muß die Einschaltflanke des einen Stromrichterventils gegenüber der Ausschaltflanke des anderen Stromrichterventils verzögert werden. Diese Zeit, auch Verriegelungszeit genannt, verursacht einen von der Stromrichtung abhängigen Spannungsfehler. Zusätzlich entsteht ein weiterer Spannungsfehler, der auf die Durchlaßspannungen von den Stromrichterventilen zurückzuführen ist. Diese Spannungsfehler führen zu Spannungsoberschwingungen, die Stromoberschwingungen und damit Drehmomentpendelungen zur Folge haben. Die Stromoberschwingungen sind durch starke Verformungen der Stromnulldurchgänge sichtbar.

Aus der EP 0 175 154 B1 ist ein Verfahren zur Regelung eines Induktionsmotors, der von einem Spannungs-Wechselrichter angesteuert wird, bekannt. Bei diesem Verfahren wird eine charakteristische Beziehung zwischen dem Wechselrichter-Ausgangsstrom und dem Wechselrichter-Ausgangsspannungssollwerten in Anbetracht des Spannungsabfalls, der durch Einschaltverzögerungsphänomene des Wechselrichters entsteht, des durch einen Widerstand des Motors verursachten Spannungsabfalls und des durch ein leitendes Element zwischen dem Motor und dem Wechselrichter entstehenden Spannungsabfalls vor dem Beginn des tatsächlichen Betriebes des Induktionsmotors bestimmt und diese festgestellten charakteristischen Beziehung in Funktionsgeneratoren gespeichert. Mittels dieser Funktionsgeneratoren werden auf der Basis der von Detektoren festgestellten Werte, die die Ausgangsströme des Wechselrichters im tatsächlichen Betrieb erfassen, Ausgangsspannungsabfälle des Wechselrichters bestimmt. Diese Werte des inneren Spannungsabfalles werden zu den Ausgangsspannungs-Sollwerten des Wechselrichters addiert. Die Werte des inneren Spannungsabfalles können mittels der Funktionsgeneratoren auch in Abhängigkeit der feldorientierten Stromkomponenten eines vorgebbaren Stromsollwertes ermittelt werden. In jedem Funktionsgenerator ist eine Funktion abgespeichert, die den inneren Spannungsabfall und den Spannungsabfall der Wicklungen des Induktionsmotors aufsummiert.

Wird der Spannungssteuersatz nach dem Verfahren der Raumzeigermodulation realisiert, sind die bei der genannten Entgegenhaltung verwendeten ständerfesten Maschinenspannungen nicht mehr zugänglich, weil man die Spannungen, die üblicherweise in einer Zweikomponenten-Stromregelung ermittelt werden, direkt in den Raumzeiger, das heißt Amplitude und Winkel, umrechnet. Das Verfahren der Raumzeigermodulation und ein zugehöriger Modulator ist in dem Aufsatz "RaumzeigerModulation bei Frequenzumrichtern" von M.W. Gekeler, abgedruckt in der DE-Zeitschrift "Antriebstechnik", Bd. 27, 1988, Nr. 4, Seiten 131-133, ausführlich beschrieben, wobei dieses beschriebene Raumzeigermodulationsverfahren durch das deutsche Patent 31 31 344 geschützt ist. Die erwähnte Zweikomponenten-Stromregelung ist im Aufsatz "Quick response space vector control for high power three-level-inverter drive system" von F. Bauer und H.-D. Heining, abgedruckt in der DE-Zeitschrift "Archiv für Elektrotechnik", Bd. 74, 1990, Seiten 53-59, im einzelnen dargestellt und beschrieben worden.

Die Erfindung beruht nun auf der Erkenntnis, daß die Durchlaßverluste des Stromrichters aus zwei Anteilen bestehen, nämlich zum einen aus einem Anteil, der durch den Bahnwiderstand der Ventile und den Phasenstrom bedingt ist, zum anderen aus einem Anteil, der von der Verriegelungszeit, der Einschaltzeit, der Zwischenkreisspannung, der Schleusenspannung der Stromrichterventile und dem Vorzeichen des Phasenstromes abhängt. Dieser Anteil springt im Nulldurchgang des Phasenstromes und kann daher von den relativ langsamen Stromreglern, die bei einer Zweikomponenten-Stromregelung verwendet werden, nur ungenügend ausgeregelt werden.

Der Erfindung liegt nun die Aufgabe zugrunde, ein Verfahren und eine Vorrichtung zur Kompensation dieser von der Richtung des Phasenstromes abhängigen Fehlerspannungen eines Pulswechselrichters anzugeben.

Diese Aufgabe wird erfindungsgemäß gelöst durch die Merkmale des Anspruchs 1 bzw. 5 oder 2 bzw. 6.

Da die Fehlerspannung von der Richtung des Phasenstromes abhängig ist, wird bei beiden Verfahren zunächst die Lage des Strom-Raumzeigers der Induktionsmaschine ermittelt, das heißt, es werden der Lastwinkel, der den Winkel zwischen dem Strom-Raumzeiger und dem Fluß-Raumzeiger angibt, und der Stromsektor, in dem sich der Strom-Raumzeiger momentan aufhält, bestimmt. Dazu werden die Stromkomponenten eines vorgebbaren Sollstrom-Raumzeigers verwendet, die bei einer Zweikomponenten-Stromregelung vorhanden sind. Der Betrag dieser Fehlerspannung, der unabhängig vom Betrag des Sollstrom-Raumzeigers ist, wird berechnet aus den Parametern des Pulswechselrichters: Verriegelungszeit, Eingangsspannung des Pulswechselrichters, Pulsfrequenz und Schleusenspannung der Stromrichterventile des Pulswechselrichters. Mittels der Bestimmung der Stromvektoren ist der Winkel bzw. Lage des Fehlerspannungs-Raumzeigers im ständerfesten Koordinatensystem bekannt.

Da dieses Verfahren bei einer Zweikomponenten-Stromregelung mit einem Raumzeigermodulator verwendet werden soll, muß der Fehlerspannungszeiger, der im ständerfesten Koordinatensystem ermittelt wurde, nur noch in ein läuferflußfestes Koordinatensystem transformiert werden. Dieser Fehlerspannungszeiger im ständerfesten Koordinatensystem könnte bei einer Regelung, die im ständerfesten Koordinatensystem arbeitet, auch direkt verwendet werden.

Um die Auswirkungen der Fehlerspannung zu kompensieren, muß zum Sollwert des Raumzeigers der Ständerspannung der Zeiger der zu erwartenden Fehlerspannung addiert werden. Dies kann sowohl im feldorientierten oder ständerorientierten Koordinatensystem geschehen, als auch, wie beim zweiten Verfahren gemäß Anspruch 2, durch direkte Veränderung der Schaltgrenzen der symmetrischen Raumzeigermodulation. Bei der Korrektur in der symmetrischen Raumzeigermodulation ist das Ergebnis noch besser und der Rechenaufwand verringert sich erheblich, da im einfachsten Fall (unsymmetrische Kompensation) nur eine einzige Addition für die Korrektur notwendig ist.

Bei einem besonders vorteilhaften Verfahren wird bei der Lagebestimmung des Fehlerspannungs-Raumzeigers nicht der Läuferflußwinkel verwendet, sondern ein um eine Totzeit extrapolierter Läuferflußwinkel. Dadurch wird die für die symmetrische Raumzeigermodulation benötigte Berechnungszeit (Totzeit der Regelung) beim Kompensationsverfahren berücksichtigt. Das heißt, während der Berechnungszeit läuft der Sollstrom-Raumzeiger mit der Ständerkreisfrequenz $\omega_s$ weiter, so daß die Lage des Sollstrom-Raumzeigers zu Beginn und zum Ende der Berechnung, die für die symmetrische Raumzeigermodulation nötig ist, nicht identisch sind. Die Abweichung ist einerseits von der Kreisfrequenz $\omega_s$ und von der Totzeit des verwendeten Prozessors abhängig.

Bei einem weiteren vorteilhaften Verfahren wird ebenfalls bei der Berechnung des Lastwinkels diese Totzeit berücksichtigt.

Zur weiteren Erläuterung wird auf die Zeichnung Bezug genommen, in der mehrere Ausführungsbeispiele einer Vorrichtung zur Durchführung des erfindungsgemäßen Kompensationsverfahrens schematisch dargestellt sind.

Figur 1    zeigt den zeitlichen Stromverlauf einer Phase ohne die Verwendung des erfindungsgemäßen Kompensationsverfahrens,

Figur 2    zeigt eine Phase einer wechselrichtergespeisten Drehfeldmaschine,

Figur 3    zeigt den idealen und realen zeitlichen Spannungsverlauf bei positivem Phasenstrom,

Figur 4    zeigt den idealen und realen zeitlichen Spannungsverlauf bei negativem Phasenstrom, in

Figur 5    ist ein Blockschaltbild einer Zweikomponenten-Stromregelung mit Raumzeigermodulator dargestellt, die um die Vorrichtung zur Durchführung des erfindungsgemäßen Verfahrens erweitert ist, in

Figur 6    ist das Blockschaltbild einer Zweikomponenten-Stromregelung mit Raumzeigermodulator gemäß Figur 5 dargestellt, die um die Vorrichtung zur Durchführung des zweiten erfindungsgemäßen Verfahrens erweitert worden ist, in

Figur 7    ist ein Ablaufdiagramm des Verfahrens nach Figur 6 dargestellt, wobei in der

Figur 8    der zeitliche Verlauf eines Phasenstroms mit Kompensation der Fehlerspannung gemäß Verfahren nach Figur 5 und in

Figur 9    ist der zeitliche Verlauf eines Phasenstroms mit Kompensation der Fehlerspannung gemäß Verfahren nach Figur 6 in einem Diagramm dargestellt.

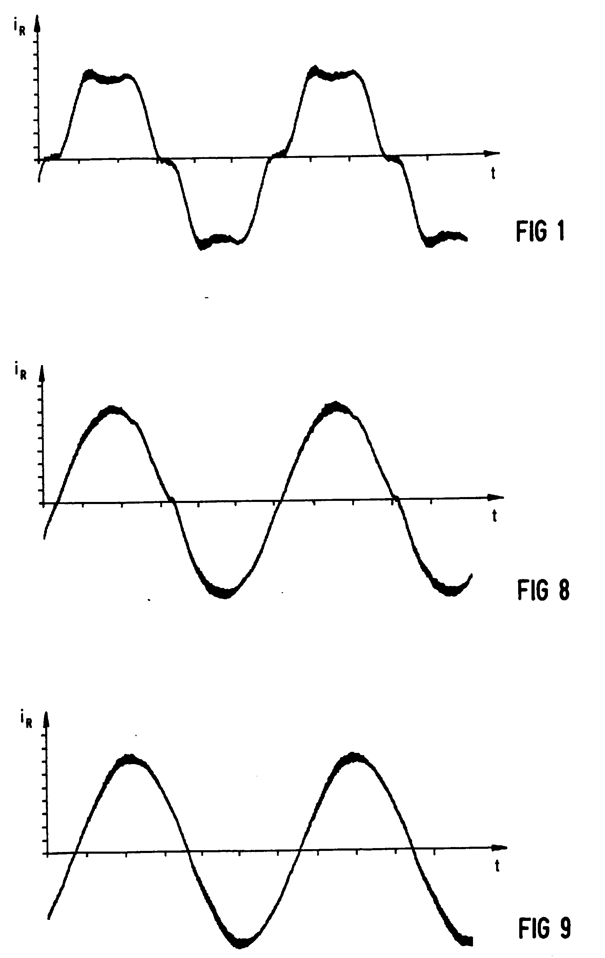

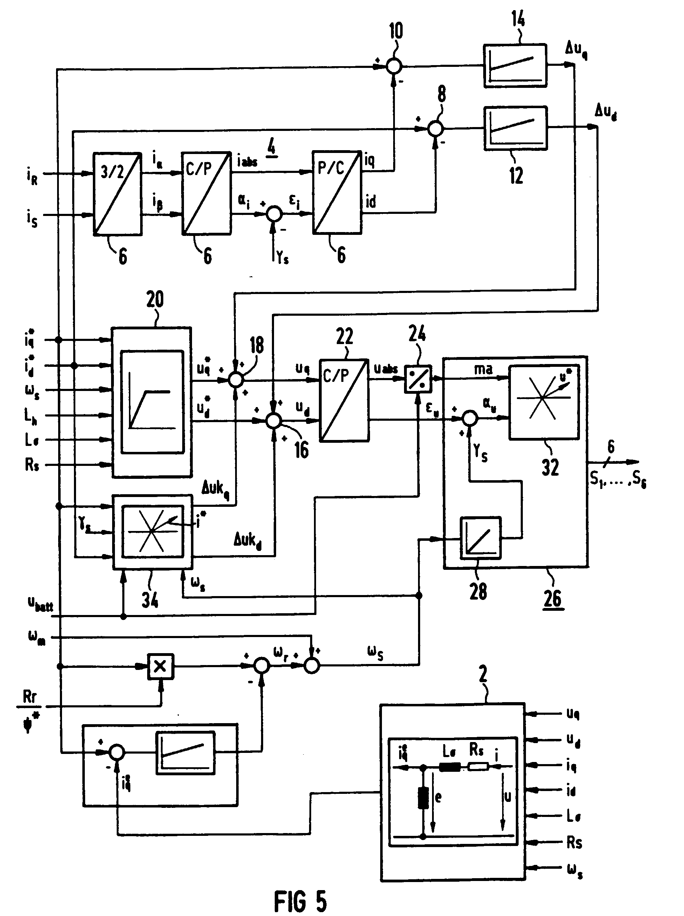

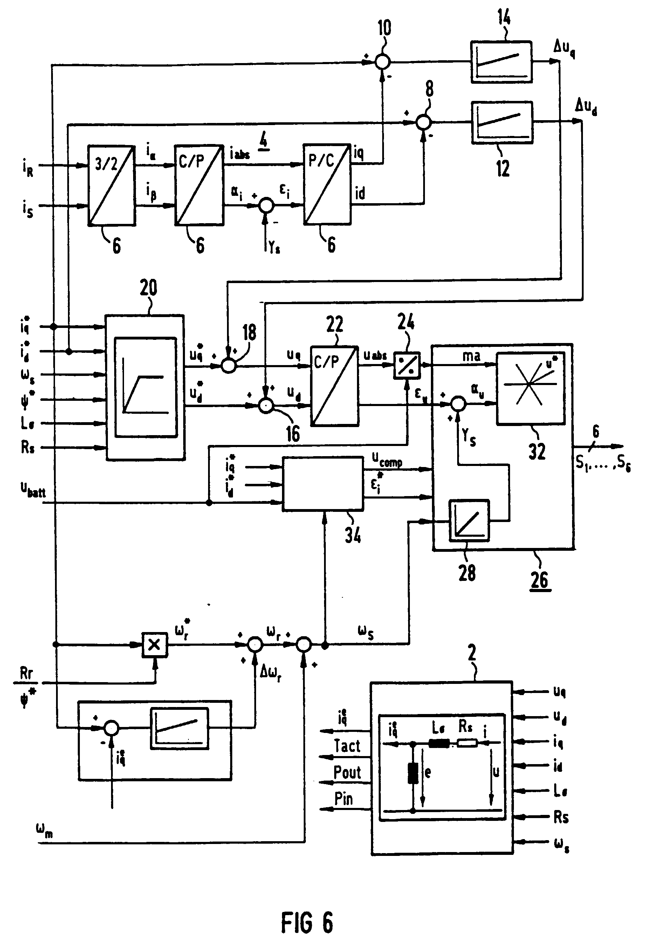

Die Figur 1 zeigt die Kurvenform des Stromes in einem Strang bei einer relativ niedrigen Drehzahl von etwa 458 U/min (ein Viertel der Nenndrehzahl). Der Motor liefert 25 Nm(etwa ein Fünftel seines Nennmoments) bei dieser Drehzahl. Dieser Betriebsfall kann auftreten, wenn der Antrieb maßvoll beschleunigt und schon etwas in Fahrt ist. Diese Stromkurvenform hat nur entfernte Ähnlichkeit mit einer Sinuskurve, obwohl die Phasenstromregler der Zweikomponenten-Stromregelung (Figur 5 und 6) eingeschaltet sind. Da die Schleusenspannung $U_f$ als Störgröße bei einem Vorzeichenwechsel des Phasenstroms springt, sind die relativ langsamen Stromregler nicht in der Lage, die Störung auszugleichen.

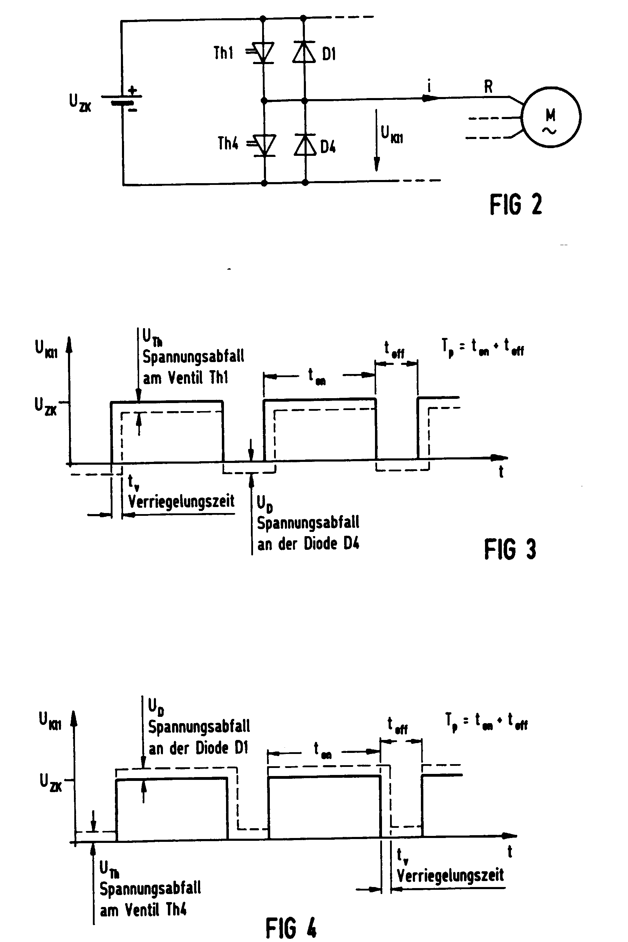

Vorerst soll nur der Fehler betrachtet werden, der sich für einen Strang des Motors ergibt. Bei der Untersuchung, wie die Spannungsabfälle an den Stromrichterventilen Th1 und Th4 und Dioden D1 und D4 gemäß Figur 2 den Raumzeiger der Ständerspannung $\underline{u}_s$ verfälschen, muß genau betrachtet werden, wie lange der Strom i durch welches Ventil fließt, weil davon Betrag und Vorzeichen des Spannungsabfalls abhängt. Dabei muß man auch berücksichtigen, daß der Strom i während der Verriegelungszeit $t_v$ immer über die Freilaufdiode D1 bzw. D4 fließt. Wenn der Strom i also von einer Diode D1 bzw. D4 auf ein Stromrichterventil Thl bzw. Th4 kommutieren sollte, dann tut der Strom i das verspätet, wodurch die Klemme für die Verriegelungszeit $t_v$ an der falschen Zwischenkreisschiene hängt.

Zur Beschreibung des Fehlers in einem Strang R soll der Klemmenspannungsfehler $\overline{U}_{Kl1,Fehler}$ eingeführt werden. Der Klemmenspannungsfehler $\overline{U}_{Kl1,Fehler}$ beschreibt die Differenz zwischen der idealen Klemmenspannung $\overline{U}_{Kl1,ideal}$ die sich aus dem Tastverhältnis und der Zwischenkreisspannung $U_{ZK}$ ergibt, und der Spannung $\overline{U}_{Kl1,real}$ die sich im Mittel an der Motorklemme der Phase R tatsächlich einstellt. Die Zählrichtung des Klemmenspannungsfehlers $\overline{U}_{Kl1,Fehler}$ wird dabei so festgelegt, wie man beispielsweise auch den Spannungsabfall an einem Zuleitungswiderstand zählen würde. Mit $t_{on}$ ist die Zeit gemeint, für die die Klemme im idealen Fall an der Plus-Schiene des Zwischenkreises an-

geschlossen sein sollte.

$$\overline{U}_{Kl1,Fehler} = \overline{U}_{Kl1,ideal} - \overline{U}_{Kl1,real}$$

$$= \frac{t_{on}}{t_{on}+t_{off}} \cdot U_{ZK} - \overline{U}_{Kl1,real} \tag{1}$$

Die Ermittlung des Klemmspannungsfehlers $\overline{U}_{Kl1,Fehler}$ muß für positive und negative Strangströme getrennt durchgeführt werden, da in beiden Fällen unterschiedliche Ventile durchflossen werden. Auch die Auswirkungen der Verriegelungszeit $t_v$ sind unterschiedlich. Die Figur 3 zeigt, wie der ideale Spannungsverlauf an der Motorklemme bei positivem Phasenstrom verändert wird. Wie aus Figur 3 leicht ersichtlich ist, gilt folgende Formel für die mittlere, tatsächliche Spannung, die sich an der Motorklemme einstellt:

$$\overline{U}_{Kl1,real,pos} = \frac{(t_{on}-t_v)\cdot(U_{ZK}-U_{Th})+(t_{off}-t_v)\cdot(-U_D)}{t_{on}+t_{off}} \tag{2}$$

Mit der Definition des Klemmenspannungsfehlers $\overline{U}_{Kl1,Fehler}$ nach Gleichung (1) läßt sich daraus der Klemmenspannungsfehler ablesen:

$$\overline{U}_{Kl1,Fehler,pos} = \frac{t_v(U_{ZK}-U_{Th}+U_D)+t_{on}U_{Th}+t_{off}U_D}{t_{on}+t_{off}} \tag{3}$$

Die Spannungsabfälle $U_{Th}$ und $U_D$ an den Halbleiterbauelementen sollen beschrieben werden durch eine Schleusenspannung $U_S$ und einen vom Klemmenstrom $i_{KL}$ durchflossenen Bahnwiderstand:

$$U_D = |U_{SDi}+R_{Di}\cdot I_{Kl}|$$

$$U_{Th} = |U_{STh}+R_{Th}\cdot I_{Kl}| \tag{4}$$

Damit läßt sich Gleichung (3) in folgender Form darstellen:

$$\overline{U}_{Kl1,Fehler,pos} = \frac{t_v}{T_p}\left[U_{ZK} + |U_{SDi} + R_{Di} \cdot I_{Kl1}| - |U_{STh} + R_{Th} \cdot I_{Kl1}|\right] +$$

$$+ \frac{t_{off}}{T_p}|U_{SDi} + R_{Di} \cdot I_{Kl1}| + \frac{t_{on}}{T_p}|U_{STh} + R_{Th} \cdot I_{Kl1}| \tag{5}$$

Die Berechnung des Klemmenspannungsfehlers für negative Stromrichtung verläuft analog dazu. Wie aus Figur 4 ersichtlich ist, gilt folgende Formel für die mittlere, tatsächliche Spannung, die sich an der Motorklemme einstellt:

$$\overline{U}_{Kl1,real,neg} = \frac{(t_{on}+t_v)\cdot(U_{ZK}+U_D)+(t_{off}-t_v)\cdot U_{Th}}{t_{on}+t_{off}} \tag{6}$$

Mit der Definition des Klemmenspannungsfehlers nach Gleichung (1) läßt sich daraus der Klemmenspannungsfehler ablesen:

$$\overline{U}_{Kl1,Fehler,neg} = \frac{t_v(-U_{ZK}-U_D+U_{Th})-t_{on}U_D-t_{off}U_{Th}}{t_{on}+t_{off}} \tag{7}$$

Mit der Beschreibung der Halbleiter-Spannungsabfälle durch Schleusenspannung $U_S$ und Bahnwiderstand R gemäß Gleichung (4) ergibt sich:

$$
\begin{aligned}
\overline{U}_{Kl1,\,Fehler,\,neg} = {} & \frac{t_v}{T_p} \cdot \left[ -U_{ZK} - \left| U_{SDi} + R_{Di} \cdot I_{Kl1} \right| + \left| U_{STh} + R_{Th} \cdot I_{Kl1} \right| \right] \\
& - \frac{t_{on}}{T_p} \cdot \left| U_{SDi} + R_{Di} \cdot I_{Kl1} \right| - \frac{t_{off}}{T_p} \cdot \left| U_{STh} + R_{Th} \cdot I_{Kl1} \right|
\end{aligned}
$$

$$\tag{8}$$

Zusammenfassend läßt sich folgendes feststellen:

Die Durchlaßverluste des Stromrichters bestehen aus zwei Anteilen, zum einen ein Anteil, der durch den Bahnwiderstand R der Ventile und den Phasenstrom i bedingt ist. Zum anderen gibt es einen Anteil, der von der Verriegelungszeit $t_v$, der Einschaltzeit $t_{on}$, der Zwischenkreisspannung $U_{ZK}$, der Schleusenspannung $U_S$ der Ventile und dem Vorzeichen des Phasenstroms $I_{KL}$ abhängt. Dieser Anteil springt im Nulldurchgang des Phasenstromes $I_{KL}$, und kann daher von den relativ langsamen Stromreglern nur ungenügend ausgeregelt werden. Bei der Vorsteuerung ist dieser Anteil deshalb wesentlich wichtiger.

1. Anteil, abhängig von Betrag und Richtung des Strangstromes $I_{KL}$:

$$
\overline{U}_{Kl1,\,Fehler\,1} = \begin{cases}
\dfrac{I_{Kl1}}{T_p} \cdot \left[ t_v \cdot \left( R_{Di} - R_{Th} \right) + t_{off} \cdot R_{Di} + t_{on} \cdot R_{Th} \right] & \text{für } I_{Kl} \geq 0 \\[3mm]
\dfrac{I_{Kl1}}{T_p} \cdot \left[ t_v \cdot \left( R_{Di} - R_{Th} \right) + t_{off} \cdot R_{Th} + t_{on} \cdot R_{Di} \right] & \text{für } I_{Kl} < 0
\end{cases}
$$

$$\tag{9}$$

2. Anteil, nur abhängig von der Richtung des Strangstromes $I_{KL}$:

$$
\overline{U}_{Kl1,\,Fehler\,2} = \begin{cases}
+ \dfrac{1}{T_p} \cdot \left( t_v \left[ U_{ZK} + \left| U_{SDi} \right| - \left| U_{STh} \right| \right] + t_{off} \left| U_{SDi} \right| + t_{on} \left| U_{STh} \right| \right) & \text{für } I_{Kl} > 0 \\[3mm]
- \dfrac{1}{T_p} \cdot \left( t_v \left[ U_{ZK} + \left| U_{SDi} \right| - \left| U_{STh} \right| \right] + t_{on} \left| U_{SDi} \right| + t_{off} \left| U_{STh} \right| \right) & \text{für } I_{Kl} < 0
\end{cases}
$$

$$\tag{10}$$

Die Formeln (9) und (10) sind in dieser Form für die praktische Anwendung zu kompliziert. Ein Mikrocontroller würde für die Berechnung und die Kompensation der Klemmenspannungsfehler viel zu viel Zeit benötigen. Deshalb werden im folgenden einige Vernachlässigungen vorgestellt, die diese Formeln wesentlich vereinfachen. Eine Vereinfachung ist die Annahme, daß sich die Stromrichterventile in Bahnwiderstand R und Schleusenspannung $U_S$ nicht unterscheiden. Somit vereinfachen sich durch diese Annahme die Gleichungen (9) und (10) erheblich:

1. Anteil mit $R_{Di} = R_{Th} = R_{Bahn}$:

$$\overline{U}_{Kl1,Fehler1} = I_{Kl1} \cdot R_{Bahn} \tag{11}$$

2. Anteil mit $|U_{SDi}| = |U_{STh}| = U_{Schleusensp.}$

$$\overline{U}_{K11,\ Fehler\,2} = signum(I_{K11}) \cdot \left[ \frac{t_v}{T_p} \cdot U_{ZK} + U_{Schleusensp.} \right] \qquad (12)$$

Man kann die Gleichung aber auch auf andere Weise vereinfachen. Diese andere Vernachlässigung, die unabhängig von den Daten der Stromrichterventile gilt, ist die Annahme, daß $t_{on}$ und $t_{off}$ gleich lang sind, das heißt,

$$t_{on} = t_{off} = \frac{T_p}{2} \qquad (13)$$

Diese Annahme ist bei der symmetrischen Raumzeigermodulation gerade für kleine Aussteuerungen des Stromrichters gültig, wo sich die Klemmenspannungsfehler ja besonders unangenehm bemerkbar machen.

Der 1. Anteil der Fehlerspannung ergibt sich aus Gl. (9) mit Gl. (13) zu:

$$\overline{U}_{K11,\ Fehler\,1} = I_{K11} \cdot \left[ \frac{t_v}{T_p} \left( R_{Di} - R_{Th} \right) + \frac{R_{Di} + R_{Th}}{2} \right] \qquad (14)$$

Da $T_p \gg t_v$ kann man weiterhin schreiben:

$$\overline{U}_{Kl1,Fehler\,1} \approx I_{Kl1} \cdot \frac{R_{Di} + R_{Th}}{2} \qquad (15)$$

Der 2. Anteil der Fehlerspannung ergibt sich aus Gl. (10) mit Gl. (13) zu:

$$\overline{U}_{K11,\ Fehler\,2} = signum(I_{K11}) \cdot \left[ \frac{t_v}{T_p} \cdot \left[ U_{ZK} + |U_{SDi}| - |U_{STh}| \right] + \frac{|U_{SDi}| + |U_{STh}|}{2} \right] \qquad (16)$$

mit $U_{ZK} \gg |U_{SDi}| - |U_{STh}|$ folgt daraus:

$$\overline{U}_{K11,\ Fehler\,2} \approx signum(I_{K11}) \cdot \left[ \frac{t_v}{T_p} \cdot U_{ZK} + \frac{|U_{SDi}| + |U_{STh}|}{2} \right] \qquad (17)$$

Vergleicht man Gleichung (11) mit Gleichung (15) und Gleichung (12) mit Gleichung (17), dann sieht man, daß man in jedem Falle richtig liegt, wenn man die mittlere Schleusenspannung und den mittleren Bahnwiderstand von Thyristor und Diode bildet und mit diesen Werten rechnet.

Die Gleichungen der Klemmenspannungsfehler sind jetzt so weit vereinfacht, daß man sie zu einem Raumzeiger zusammenfassen kann.

In jedem der drei Zweige des Stromrichters tritt ein Klemmenspannungsfehler auf. Diese drei Klemmenspannungsfehler lassen sich zu einem Fehlerspannungszeiger zusammenfassen.

$$\underline{U}_{Fehler} = \frac{2}{3} \left( \overline{U}_{Kl1,Fehler} + \underline{a} \cdot \overline{U}_{Kl2,Fehler} + \underline{a}^2 \cdot \overline{U}_{Kl3,Fehler} \right) \qquad (18)$$

Wie bei der Betrachtung des Fehlers in einem Strang sollen die beiden Anteile der Fehlerspannung getrennt betrachtet werden. Für Anteil 1, den ohmschen Anteil an der Fehlerspannung, ergibt sich nach Gleichung (11) direkt:

$$\underline{U}_{Fehler\,1} = \frac{2}{3}\,(I_{Kl1} + \underline{a} \cdot I_{Kl2} + \underline{a}^2 \cdot I_{Kl3}) \cdot R_{Bahn} =$$

$$= \underline{I}_1 \cdot R_{Bahn} \qquad\qquad\qquad\qquad (19)$$

Der Bahnwiderstand der Ventile wirkt also wie der Ständerwiderstand des Motors, und er kann in der Regel auch genauso berücksichtigt werden. Zum Beispiel kann im Spannungsmodell der Ständerwiderstand einfach um den Wert des Bahnwiderstandes erhöht werden. Das eigentliche Problem ist aber nicht der ohmsche Anteil, weil dieser als Störgröße im Nulldurchgang des Stromes keinen Sprung aufweist und deshalb schon von den Stromreglern recht gut ausgeregelt werden kann.

Der wichtigere Anteil ist vielmehr der Anteil 2 des Klemmenspannungsfehlers. Für die Beschreibung dieses Anteils soll hier die sogenannten "Stromsektoren" eingeführt werden. Abhängig von der Winkellage $\varepsilon_i$ des Ständerstromzeigers $\underline{i}_s$ kann man sechs Stromsektoren definieren, in denen die Phasenströme $I_R, I_S, I_T$ jeweils ein bestimmtes Vorzeichen haben. Der folgenden Tabelle 1 sind die Vorzeichen der Strangströme $I_R$, $I_S$ und $I_T$ in den Stromsektoren zu entnehmen:

(Tabelle 1)

| Stromsektor | Vorzeichen der Strangströme | | |
|:---:|:---:|:---:|:---:|
| | $I_R$ | $I_S$ | $I_T$ |
| 1 | pos. | neg. | neg. |
| 2 | neg. | pos. | neg. |
| 3 | neg | pos. | neg. |
| 4 | neg | pos. | pos. |
| 5 | neg | neg. | pos. |
| 6 | pos. | neg. | pos. |

Der Anteil 2 der Fehlerspannung ist nach Gleichung (12) nur vom Vorzeichen der Phasenströme abhängig, und nicht von deren Betrag. Daher ergibt sich für jeden Stromsektor ein zugehöriger Fehlerspannungszeiger $\underline{U}_{Fehler2}$, dessen Länge und Richtung unabhängig vom Betrag des Stromzeigers $\underline{i}_s$ ist, und nur davon abhängt, in welchem Stromsektor der Stromzeiger $\underline{i}_s$ steht. Um die Schreibweise zu vereinfachen, soll der Betrag der Fehlerspannung $U_{KLF}$ eingeführt werden:

$$U_{KLF} := \frac{t_v + U_{ZK}}{T_p} + U_{Schleusensp.} \qquad\qquad (20)$$

Nach Gleichung (12) ergeben sich mit der Bildungsvorschrift für den Raumzeiger Gleichung (17) unter Berücksichtigung der Vorzeichen der Strangströme, die folgenden Fehlerspannungszeiger $\underline{U}_{Fehler2}$ für die einzelnen Stromsektoren:

(Tabelle 2)

| Stromsektor | stromrichtungsabhängiger Fehlerspannungszeiger $\underline{U}_{Fehler2}$ |
|:---:|:---:|
| 1 | $\underline{U}_{Fehler2} = \frac{2}{3}\,(+1 - a - a^2) \cdot U_{KLF} = \frac{4}{3} \cdot U_{KLF}$ |
| 2 | $\underline{U}_{Fehler2} = \frac{2}{3}\,(+1 + a - a^2) \cdot U_{KLF} = -a^2\,\frac{4}{3} \cdot U_{KLF}$ |
| 3 | $\underline{U}_{Fehler2} = \frac{2}{3}\,(-1 + a - a^2) \cdot U_{KLF} = a\,\frac{4}{3} \cdot U_{KLF}$ |
| 4 | $\underline{U}_{Fehler2} = \frac{2}{3}\,(-1 + a + a^2) \cdot U_{KLF} = -\frac{4}{3} \cdot U_{KLF}$ |
| 5 | $\underline{U}_{Fehler2} = \frac{2}{3}\,(-1 - a + a^2) \cdot U_{KLF} = a^2\,\frac{4}{3} \cdot U_{KLF}$ |
| 6 | $\underline{U}_{Fehler2} = \frac{2}{3}\,(+1 - a + a^2) \cdot U_{KLF} = -a\,\frac{4}{3} \cdot U_{KLF}$ |

Der Fehlerspannungszeiger $\underline{U}_{Fehler2}$ zeigt also immer in die Richtung der Winkelhalbierenden des Stromsektors, in der sich der Ständerstromzeiger $\underline{i}_s$ gerade befindet.

$$\underline{U}_{Fehler2} = \frac{4}{3}\, U_{KLF} \cdot e^{\, j\frac{\pi}{3}\cdot (Stromsektor\text{-}1)} \tag{21}$$

Um die Auswirkung der Fehlerspannung $\underline{U}_{Fehler2}$ zu kompensieren, muß zum Sollwert des Raumzeigers der Ständerspannung $\underline{u}_s$ der Zeiger der zu erwartenden Fehlerspannung $\underline{U}_{Fehler2}$ addiert werden. Dies kann sowohl im feldorientierten Koordinatensystem der Regelung geschehen, als auch durch direkte Veranderung der Schaltgrenzen der symmetrischen Raumzeigermodulation.

Es wurde gezeigt, daß die Fehlerspannung $U_{Fehler\,1}$ gemäß Gleichung (18) durch eine Erhöhung des Ständerwiderstandes im Spannungsmodell kompensiert werden kann. Das soll auch hier so geschehen, weil es die einfachste Möglichkeit ist. Nun muß noch der 2. Anteil der Fehlerspannung kompensiert werden. Die Fehlerspannung $U_{Fehler\,2}$ lautet in ständerfesten Koordinaten gemäß Gleichung (21):

$$\underline{U}_{Fehler2} = \frac{4}{3} \cdot U_{KLF} \cdot e^{\, j\frac{\pi}{3}\cdot (Stromsektor\text{-}1)} \tag{21}$$

Um diese Fehlerspannung auszugleichen, muß zur Sollspannung ein Korrekturspannungsvektor addiert werden, der genauso groß ist wie die Fehlerspannung. Die Addition läßt sich leicht durchführen im läuferfesten d,q-Koordinatensystem, da dieses ein karthesisches Koordinatensystem ist, und somit nur die Komponenten addiert werden müssen. Die Fehlerspannung, die in ständerfesten Polarkoordinaten gegeben ist, muß dazu erst ins d,q-Koordinatensystem transformiert werden. Die Transformation der Fehlerspannung in ein feldorientiertes Koordinatensystem geschieht weitgehend analog zu der Transformation der Ständerströme $i_R$ und $i_S$ gemäß Figur 5 bzw. Figur 6 ins d,q-Koordinatensystem. Zuerst wird die Fehlerspannung in ein läuferflußfestes Polarkoordinatensystem transformiert, in dem der Läuferflußwinkel $\gamma_s$ vom Winkel des Fehlerspannungszeigers abgezogen wird. Bei einer vorteilhaften Ausführungsform des Verfahrens wird allerdings nicht der aktuelle Läuferflußwinkel $\gamma_s$ verwendet, sondern der Läuferflußwinkel $\gamma_s$ wird in die Zukunft extrapoliert. Man versucht dadurch, die Totzeiten $t_T$ auszugleichen. Diese Extrapolation ist von der Totzeit $t_T$ eines verwendeten Prozessors abhängig, die sich mit der Ständerkreisfrequenz $\omega_s$ ändert. Mit dem extrapolierten Läuferflußwinkel $\gamma_{s,ext}$ ergibt sich der Winkel des Korrekturspannungszeigers im läuferflußfesten Polarkoordinatensystem zu:

$$\varepsilon_{U_{Korrektur}} = \frac{\pi}{3} \cdot (Stromsektor - 1) - \gamma_{1,ext} \tag{22}$$

Mit dem Kosinus und dem Sinus dieses Winkels lassen sich die Achsabschnitte des Fehlerspannungszeigers im läuferfesten d,q-Koordinatensystem angeben:

$$\begin{aligned}
U_d &= \frac{4}{3} U_{KLF} \cdot \cos\left[\frac{\pi}{3} \cdot (Stromsektor - 1) - \gamma_{1,ext}\right] \\
U_q &= \frac{4}{3} U_{KLF} \cdot \sin\left[\frac{\pi}{3} \cdot (Stromsektor - 1) - \gamma_{1,ext}\right]
\end{aligned} \tag{23}$$

Diese Werte müssen zu den Komponenten $u^*_q$ und $u^*_d$ der Soll-Ständerspannung $\underline{u}^*_s$ addiert werden, damit die Fehlerspannung ausgeglichen wird. Der Stromsektor, in dem sich der Stromzeiger $\underline{i}^*_s$ befindet, wird anhand der Stromkomponenten $i^*_q$ und $i^*_d$ des Sollstrom-Raumzeigers $\underline{i}^*_s$ im flußfesten Koordinatensystem berechnet:

$$Stromsektor = 1 + Int\left[\frac{\left(\varepsilon + \gamma_{1,ext} + 30°\right)}{60°}\right] \tag{24}$$

8

mit dem Lastwinkel $\varepsilon_i$ des Stromes:

$$\varepsilon_i = \arctan \frac{i_q}{i_d} \tag{25}$$

Bei höheren Ständerfrequenzen fallen weniger Abtastungen der Zeitscheibe der Regelung in den Zeitraum, in dem der Ständerstromzeiger $\underline{i}_s$ einen Stromsektor durchläuft. Da die Ständerfrequenz und die Zeitscheibe nicht synchronisiert sind, fallen nicht immer gleich viele Abtastungen in einen Stromsektor. Das heißt, die Korrekturspannung eines Stromsektors kann zum Beispiel einmal öfter auf den Motor aufgeschaltet werden als die Korrekturspannung des nächsten Sektors. Durch den Unterschied zwischen Ständerfrequenz und Zeitscheibe kann es zu niederfrequenten Schwingungen kommen, die sich störend bemerkbar machen.

Deshalb wird bei einem vorteilhaften Verfahren bei Ständerfrequenzen über einem vorgebbaren Frequenzwert eine Korrekturspannung aufgeschaltet, die, unabhängig vom Stromsektor, immer in Richtung des Ständerstromzeigers $\underline{i}_s$ zeigt. Die Länge dieses Korrekturzeigers ergibt sich aus der Mittelung der Projektion des ursprünglichen Korrekturvektors auf den Ständerstromzeiger $\underline{i}_s$, während dieser durch einen Sektor wandert. Die Korrekturspannung für Ständerfrequenzen über einen vorgebbaren Frequenzwert in Komponentenschreibweise ergibt sich gemäß folgender Gleichung:

$$\begin{aligned} U_d &= \frac{4}{\pi} \cdot U_{KLF} \cdot \cos \varepsilon_i \\ U_q &= \frac{4}{\pi} \cdot U_{KLF} \cdot \sin \varepsilon_i \end{aligned} \qquad , \tag{26}$$

wobei $\varepsilon_i$ wieder der Lastwinkel des Stromes nach Gleichung (25) ist.

Beim zweiten Kompensationsverfahren wird eine Vektoraddition ohne viel Rechenaufwand durchgeführt, und zwar in der symmetrischen Raumzeigermodulation. Diese Möglichkeit wird im folgenden beschrieben:

Der Anteil 2 der Fehlerspannung soll durch ein Verschieben der "Schaltgrenzen" der symmetrischen Raumzeigermodulation berücksichtigt werden. An dieser Stelle soll erst einmal erläutert werden, was mit einer "Schaltgrenze" gemeint ist. Bei der symmetrischen Raumzeigermodulation sind die Schaltzeitpunkte für die Ventile innerhalb einer Taktperiode symmetrisch zu $T_p/2$. Dies gilt jedenfalls dann, wenn für beide Hälften der Raumzeigermodulation der gleiche Sollspannungszeiger gilt.

In diesem Falle kann man die Schaltzeitpunkte für die drei Phasen gewinnen aus dem Vergleich dreier Konstanten mit einer dreiecksförmigen Zeitfunktion. Die drei Konstanten sollen als "Schaltgrenzen" $G_R$, $G_S$, $G_T$ bezeichnet werden. Der Wert der Schaltgrenzen soll wie üblich nach den Regeln der symmetrischen Raumzeigermodulation berechnet werden.

Wie bereits eingangs erwähnt, ist die Raumzeigermodulation im Aufsatz von M.W. Gekeler, abgedruckt in der DE-Zeitschrift "Antriebstechnik", Bd. 27, 1988, Nr. 4, Seiten 131-133, ausführlich beschrieben worden. Das Berücksichtigen der Fehlerspannung soll durch eine nachträgliche Änderung der Schaltgrenzen erfolgen. Im folgenden wird auch gezeigt, daß das Ändern einer der drei Schaltgrenzen bereits ausreicht, um den Fehlerspannungszeiger aufzuschalten.

Während einer Taktperiode der symmetrischen Raumzeigermodulation steigt die Dreiecksfunktion von Wert 0 auf 1 und fällt bis zum Ende der Modulationsperiode wieder auf null. Während einer Modulationsperiode wird jede der drei Motorklemmen einmal an die Plusschiene des Zwischenkreises gelegt, und dann wieder an die Minusschiene. Je größer der Wert einer Schaltgrenze ist, um so länger liegt die zugehörige Motorklemme an der Minusschiene. Die Schaltgrenze gibt das Tastverhältnis an, mit dem die Motorklemme an die Minus- und die Plus-Schiene angelegt wird.

Die mittleren Klemmenspannungen an den drei Motorklemmen kann man durch die Schaltgrenzen ausdrücken:

$$\overline{U}_{Kl1} = U_{ZK} \cdot [1 - G_R]; \ \overline{U}_{Kl2} = U_{ZK} \cdot [1 - G_S]; \ \overline{U}_{Kl3} = U_{ZK} \cdot [1 - G_T] \tag{27}$$

Die drei Klemmspannungen kann man zum Raumzeiger der Ständerspannung zusammenfassen:

$$\underline{U} = \frac{2}{3}\left(\overline{U}_{K11} + \underline{a}\,\overline{U}_{K12} + \underline{a}^2\,\overline{U}_{K13}\right) =$$

$$= \frac{2}{3}\,U_{ZK}\cdot\left([1 - G_R] + \underline{a}\cdot[1 - G_S] + \underline{a}^2\cdot[1 - G_T]\right) = \qquad (28)$$

$$= -\frac{2}{3}\,U_{ZK}\cdot\left(G_R + \underline{a}\cdot G_S + \underline{a}^2\cdot G_T\right)$$

Die Schaltgrenzen $G_R$, $G_S$, $G_T$ werden, wie im angegebenen Aufsatz beschrieben, für die Schaltzeiten der symmetrischen Raumzeigermodulation berechnet. Durch ein nachträgliches Verändern der Schaltgrenzen kann der Raumzeiger des voraussichtlichen Klemmenspannungsfehlers addiert werden. Im Gegensatz zur Addition im flußfesten Koordinatensystem der Regelung ist hier keine Transformation in ein rotierendes Koordinatensystem nötig, sondern lediglich Skalaradditionen bei den Schaltgrenzen.

Allgemein lautet die Kompensationsgleichung mit Gleichung (28) und Gleichung (21):

$$\Delta\underline{U} = -\frac{2}{3}\,U_{ZK}\cdot\left(\Delta G_R + \underline{a}\cdot\Delta G_S + \underline{a}^2\cdot\Delta G_T\right)$$

$$\overset{!}{=} \frac{4}{3}\cdot U_{KLF}\cdot e^{j\,\frac{\pi}{3}\cdot(Stromsektor-1)} \qquad (29)$$

$$-\frac{2}{3}\,U_{ZK}\cdot\left(\Delta G_R + \underline{a}\cdot\Delta G_S + \underline{a}^2\cdot\Delta G_T\right)\overset{!}{=} \frac{4}{3}\cdot\left(\frac{t_v\cdot U_{ZK}}{T_p} + U_{Schleusensp.}\right)\cdot e^{j\,\frac{\pi}{3}\cdot(Stromsektor-1)}$$

$$\Delta G_R + \underline{a}\cdot\Delta G_S + \underline{a}^2\cdot\Delta G_T \overset{!}{=} 2\cdot\underbrace{\left(-\frac{t_v}{T_p} - \frac{U_{Schleusensp.}}{U_{ZK}}\right)}_{Korr}\cdot e^{j\,\frac{\pi}{3}\cdot(Stromsektor-1)} \qquad (30)$$

Als Vereinfachung der Schreibweise soll hier der Wert "Korr" für die Korrektur der Grenzen eingeführt werden.

$$Korr = -\frac{t_v}{T_p} - \frac{U_{Schleusensp.}}{U_{ZK}} \qquad (31)$$

Einer der drei ΔG-Werte ist frei wählbar, die anderen beiden können dann aus Gleichung (30) berechnet werden. Sinnvoll erscheinen insbesondere zwei Varianten:

- Nur eine der drei Grenzen wird verändert, die anderen beiden bleiben kostant. Da der Winkel des Fehlerspannungsszeigers immer ein Vielfaches von 60° ist, kann er in jedem Falle durch das Verändern nur einer Grenze kompensiert werden. Diese Variante benötigt die wenigste Rechenzeit, weil nur eine Addition nötig ist. Die Variante soll als unsymmetrische Kompensation bezeichnet werden. Die Tabelle 3 zeigt in Abhängigkeit von Stromsektor, welche Schaltgrenzen verändern müssen.

- Alle drei Grenzen werden betragsmäßig um dengleichen Betrag verändert (symmetrische Kompensation). Diese Variante erfordert mehr Rechenaufwand (drei Additionen). Die Tabelle 4 zeigt, wie die drei Schaltgrenzen in Abhängigkeit vom aktuellen Stromsektor verändert werden müssen.

Die Tabellen 3 und 4 zeigen, wie die Schaltgrenzen in Abhängigkeit von Stromsektor jeweils geändert werden müssen.

Tabelle 3:

| Unsymmetrische Kompensation | | | | | | |
|---|---|---|---|---|---|---|
| Stromsektor: | 1 | 2 | 3 | 4 | 5 | 6 |
| $\Delta G_R =$ | +2*Korr | 0 | 0 | -2*Korr | 0 | 0 |
| $\Delta G_S =$ | 0 | 0 | +2*Korr | 0 | 0 | -2*Korr |
| $\Delta G_T =$ | 0 | -2*Korr | 0 | 0 | +2*Korr | 0 |

Tabelle 4:

| Symmetrische Kompensation | | | | | | |
|---|---|---|---|---|---|---|
| Stromsektor: | 1 | 2 | 3 | 4 | 5 | 6 |
| $\Delta G_R =$ | + Korr | + Korr | - Korr | - Korr | - Korr | + Korr |
| $\Delta G_S =$ | - Korr | + Korr | + Korr | + Korr | - Korr | - Korr |
| $\Delta G_T =$ | - Korr | - Korr | - Korr | + Korr | + Korr | + Korr |

Die Nummer des Stromsektors wird nach Gleichung (24) bestimmt, es wird hier nur für die Extrapolation des Winkels eine kürzere Zeit, beispielsweise $t_T = 500$ μsec, verwendet.

$$\gamma_{1,ext} = \gamma_1 + \omega_1 \cdot t_T$$

$$Stromsektor = 1 + Int\left[\frac{(\varepsilon + \gamma_{1,ext} + 30°)}{60°}\right] \qquad (32)$$

Der Stromsektor muß zwar für jede Periode der Raumzeigermodulation neu berechnet werden, einige Berechnungen können jedoch auch in langsameren Zeitscheiben durchgeführt werden. Es genügt, wenn man den Lastwinkel $\varepsilon_i$, der nach Gleichung (25) aus den Stromkomponenten des Sollstrom-Raumzeigers ermittelt wird, nur beispielsweise alle 10 msec berechnet, weil auch die neuen Sollwerte der Ströme nur beispielsweise alle 10 msec berechnet werden. Aus demselben Grund kann auch die Berechnung von $\overline{\omega}_1 \cdot t_T$ mit $t_T = 500$ μsec bereits in der beispielsweisen 10 msec-Zeitscheibe durchgeführt werden, so daß für die Ermittlung des Stromsektors, beispielsweise in der 333 μsec-Zeitscheibe nur noch wenige Rechenoperationen nötig sind.

Die Figur 5 zeigt ein Blockschaltbild einer Vorrichtung zur Regel- und Steuerung eines spannungseinprägenden Umrichters. Bei dieser Regelung werden die Ständerströme $i_R$, $i_S$ und $i_T$ einer Asynchronmaschine in einem mit Ständerfrequenz $\omega_s$ drehend, in der Regel am Flußwinkel $\gamma_s$ orientierten Koordinatensystem geregelt. Eine derartige Regelung wird als Vektorregelung bezeichnet, mit der es möglich ist, eine Asynchronmaschine regelungstechnisch ähnlich zu führen wie eine Gleichstrommaschine. Hierbei wird mit Hilfe von Transformationsgleichungen für eine mehrphasige Maschine ein zweiphasiges Modell aufgestellt, in dem die flußbildende Stromkomponente $i_d$ und die drehmomentbildende Stromkomponente $i_q$ unabhängig voneinander geregelt werden. Bei einer Änderung der Belastung wird die drehmomentbildende Stromkomponente $i_q$ unverzüglich auf ihren neuen Wert geregelt, während die flußbildende Stromkomponente $i_d$ ihren alten Wert beibehält. Die Stellgröße des Stromregelverfahrens sind die beiden Komponenten $u^*_d$ und $u^*_q$ der Ständerspannung $\underline{u}^*_s$ in diesem Koordinatensystem, da die Regelung für einen spannungseinprägenden Umrichter, beispielsweise einen Pulsumrichter oder Direktumrichter, vorgesehen ist.

Zum Ermitteln der fluß- und drehmomentbildenden Stromkomponenten $i_d$ und $i_q$ benötigt die Vektorregelung sowohl die Kenntnis der Größen des Ersatzschaltbildes der Asynchronmaschine (Wicklungswiderstand $R_S$, Steuerinduktivität $L_\sigma$ und Hauptinduktivität $L_h$) als auch den aktuellen Drehzahl-Istwert n. Mittels eines Flußrechners 2, dem ein Spannungs-Istvektor $\underline{u}_s$ bzw. transformierte Komponenten $u_d$ und $u_q$ und ein Strom-Istvektor $\underline{i}_s$ bzw. dessen transformierte Komponenten $i_d$ und $i_q$ zugeführt sind, werden mittels der Koeffizienten $R_S$ und $L_\sigma$ der Betrag des Rotorflusses und dessen Lage $\gamma_s$ ermittelt. Ausführungsformen des Flußrechners 2 und deren Arbeitsweise ist in der DE-Zeitschrift "Archiv für Elektrotechnik" 74, 1990, Seiten 53 bis 59, zu entnehmen. Mit Hilfe einer Koordinatentransformationseinrichtung 4, die mehrere Koordinatenwandler 6 enthält, und der ermittelten Flußlage $\gamma_s$ werden die gemessenen Phasenströme $i_R$ und $i_S$ in eine fluß- und drehmomentbildende Stromkomponente $i_d$ und $i_q$ transformiert. Der Flußrechner 2 und die Transformationseinrichtung 4 sind in der Praxis sehr oft zu einer Baueinheit zusammengefaßt, die sich Istwertrechner nennt.

Diese ermittelten Stromkomponenten $i_d$ und $i_q$ werden jeweils einem Vergleicher 8 und 10 zugeführt, an deren nicht-invertierenden Eingängen jeweils ein Stromkomponenten-Sollwert $i^*_d$ und $i^*_q$ anstehen. Ausgangsseitig ist jeder Vergleicher 8 bzw. 10 mit einem Stromregler 12 bzw. 14 verknüpft, der ausgangsseitig mit einem Addierer 16 bzw. 18 verbunden ist. Als Regler 12 bzw. 14 ist ein proportional-integral wirkender Regler vorgesehen. Diese Stromregler 12 und 14 werden von einem Vorsteuernetzwerk 20 dadurch unterstützt, daß Vorsteuergrößen $u^*_d$ und $u^*_q$ bestimmt werden, die jeweils dem Addierer 16 und 18 zugeführt werden. Somit müssen die Stromregler 12 und 14 an ihren Ausgängen nurmehr die Spannung $\Delta_{ud}$ und $\Delta_{uq}$ liefern, die vom Vorsteuernetzwerk 20 nicht ermittelt werden, beispielsweise dynamische Anteile, Fehler, etc.. Die Ausgänge der beiden Addierer 16 und 18 werden einem Koordinatenwandler 22 zugeführt. Mit diesem Koordinatenwandler 22 werden die kartesischen Koordinaten $u_d$ und $u_q$ in Polarkoordinaten $u_{abs}$ und $\varepsilon_u$ gewandelt. Die Betragskoordinate $u_{abs}$ wird mittels eines Dividierers 24, an dessen zweiten Eingang eine Eingangsgröße $u_{batt}$ des Pulswechselrichters ansteht, normiert. Die Ausgangsgröße ma des Dividierers 24, die Winkelkoordinate $\varepsilon_u$ und die Ständerfrequenz $\omega_s$ werden einem Raumzeigermodulator 26 zugeführt. Die Ausgangsgröße ma des Dividierers 24 gibt die Modulationsamplitude an. Der Raumzeigermodulator 26 weist einen Winkelintegrator 28, einen Addierer 30 und eine Recheneinheit 32 auf. Mittels des Winkelintegrators 28 und der Ständerfrequenz $\omega_s$ wird die Flußlage $\gamma_s$ im ständerorientierten Koordinatensystem ermittelt, die zur Lage $\varepsilon_u$ des Spannungszeigers $u_{abs}$ im flußorientierten Koordinatensystem addiert wird. Als Summe dieser beiden Winkel $\gamma_s$ und $\varepsilon_u$ erhält man die Lage $\alpha_u$ des Spannungs-Raumzeigers $\underline{u}_s$ im ständerorientierten Koordinatensystem. Somit ist mittels des Winkelintegrators 28 und des Addierers 30 eine Transformation vom flußorientierten ins ständerorientierte Koordinatensystem durchgeführt worden. Aus den Signalen ma (Modulationsamplitude) und $\alpha_u$ (Lage des Spannungs-Raumzeigers $\underline{u}_s$) werden mittels der Recheneinheit 32 die Steuersignale $S_1,...,S_6$ für den Pulswechselrichter bestimmt. Die Wirkungsweise und der Aufbau dieser Recheneinheit 32 ist beispielsweise der DE-Zeitschrift "Antriebstechnik", Bd. 27, 1988, Nr. 4, Seiten 131-134 bzw. dem deutschen Patent 31 31 344 zu entnehmen.

Das Vorsteuernetzwerk 20, das auch als Entkopplungsnetzwerk bezeichnet wird, ist auch in dem eingangs genannten Aufsatz abgedruckt in der DE-Zeitschrift "Archiv für Elektrotechnik", Bd. 74, 1990, Seiten 53-59, ausführlich dargestellt und beschrieben worden, so daß hier nur das wesentliche genannt wird. Das Vorsteuernetzwerk 20 benötigt folgende Eingangsgröße: Ständerfrequenz $\omega_s$, flußbildende Stromkomponenten-Sollwert $i^*_d$ und drehmomentbildende Stromkomponenten-Sollwert $i^*_q$. Außerdem benötigt dieses Vorsteuernetzwerk 20 die Werte der Koeffizienten Ständerwiderstand $R_S$, Streuinduktivität $L_\sigma$ und Hauptinduktivität $L_h$. Aufgrund der Sollwertvorgaben berechnet das Vorsteuerwerk 20 die zu erwartenden Spannungsanteile $u^*_d$ und $u^*_q$, die zur Entlastung der Stromregler 12 und 14 auf deren Reglerausgänge aufgeschaltet werden. Sind die Parameter $R_S$, $L_\sigma$ und $L_h$ der Vorsteuerung richtig eingestellt, so liefern die Stromregler 12 und 14 an ihren Ausgängen eine Regler-Stellgröße $\Delta u_d$ und $\Delta u_q$, die jeweils gleich null ist. Die gesamte, für die gewünschten Stromkomponenten $i^*_d$ und $i^*_q$ erforderlichen Spannungskomponenten $u_d$ und $u_q$ werden vom Vorsteuernetzwerk 20 berechnet.

Um die erzeugten Fehlerspannungen zu kompensieren, werden bei dieser Ausführungsform gemäß Figur 5 die Spannungskomponenten $u^*_d$ und $u^*_q$ des Vorsteuernetzwerks 20 jeweils mit einer Korrekturspannungskomponente $\Delta uk_d$ und $\Delta uk_q$ überlagert. Diese Korrekturspannungskomponente $\Delta uk_d$ und $\Delta uk_q$ werden mittels einer Rechenschaltung 34 aus den Stromkomponenten-Sollwerten $i^*_d$ und $i^*_q$, der Flußlage $\gamma_s$, der Ständerfrequenz $\omega_s$ und der Eingangsgröße $u_{batt}$ des Pulswechselrichters ermittelt. Wie bereits erwähnt, ist der Anteil 2 der Fehlerspannung nach Gleichung 12 nur vom Vorzeichen der Phasenströme $i_R$, $i_S$ und $i_T$ der Induktionsmaschine abhängig. Daher ergibt sich für jeden Stromsektor ein zugehöriger Fehlerspannungszeiger $\underline{U}_{Fehler2}$, dessen Länge und Richtung unabhängig vom Betrag des Stromzeigers $i^*_s$ ist, und nur davon abhängt, in welchem Stromsektor der Stromzeiger $i^*_s$ steht. Deshalb wird mittels der Stromkomponenten-Sollwerte $i^*_d$ und $i^*_q$ der Lastwinkel $\varepsilon_i$ des Stromes gemäß Gleichung (25) berechnet. Mittels diesem Lastwinkel $\varepsilon_i$ und dem Flußwinkel $\gamma_s$ wird der zugehörige Stromsektor gemäß Gleichung (24) ermittelt, mit dem dann die Lage $\varepsilon_{UKorrektur}$ des Fehlerspannungsvektors $\underline{u}_{Fehler2}$ gemäß Gleichung (21) bestimmt wird.

Da bei dieser Ausführungsform die Regelung im feldorientierten Koordinatensystem abläuft, muß der ermittelte Fehlerspannungsvektor $\underline{u}_{Fehler2}$ vom ständerfesten Koordinatensystem ins feldorientierte Koordinatensystem transformiert werden. Die Abschnitte des Fehlerspannungszeigers $\underline{u}_{Fehler2}$ lassen sich mit dem Kosinus und dem Sinus des Winkels $\varepsilon_{UKorrektur}$ im läuferfesten d, q-Koordinatensystem angeben (Gleichung (23)). Diese Komponenten $U_d$ und $U_q$ werden als Korrekturspannungskomponenten $\Delta uk_d$ und $\Delta uk_q$ zu den Spannungskomponenten-Sollwerten $u^*_d$ und $u^*_q$ des Vorsteuernetzwerkes 20 addiert.

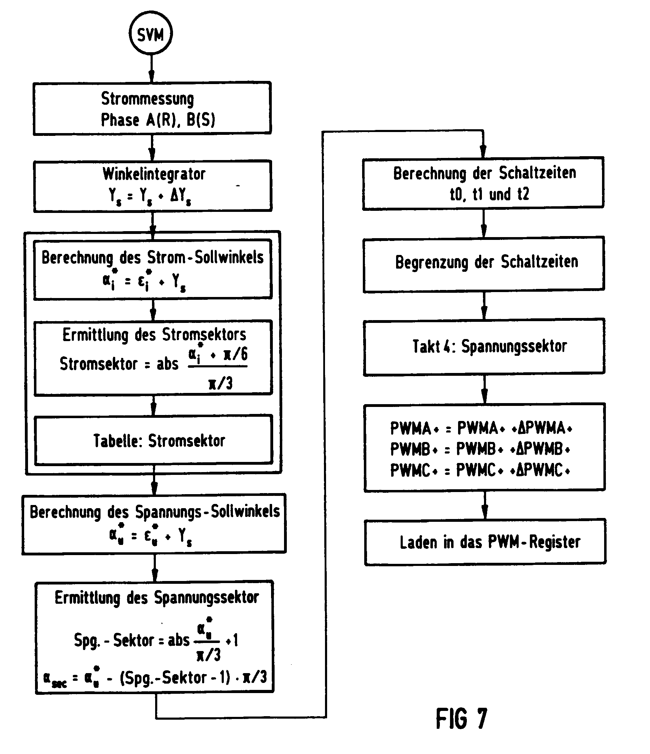

Die Regel-und Steuervorrichtung gemäß Figur 6 unterscheidet sich von der Ausführungsform gemäß Figur 5 nur dadurch, daß die Rechenschaltung 34 ausgangsseitig nicht mit dem Addierer 16 und 18, sondern mit dem Raumzeigermodulator 26 verknüpft ist. Somit braucht die Rechenschaltung 34 den Fehlerspannungszeiger $\underline{u}_{Fehler2}$ nicht mehr vom ständerfesten Polarkoordinatensystem ins läuferfeste Koordinatensystem transformiert werden. Außerdem verringert sich der Rechenaufwand gegenüber der Ausführungsform gemäß Figur 5 erheblich, da die Korrektur direkt mit den berechneten Ansteuerzeiten durchgeführt wird. Somit läßt sich das erfindungsgemäße Verfahren mit geringem Rechenaufwand in der Steuersatzroutine mit der der Pulsfrequenz entsprechenden Abtastzeit durchführen. Ein Flußdiagramm dieser Steuersatzroutine ist in der Figur 7 näher dargestellt. Die Abtastzeit für die feldorientierte Regelung beträgt beispielsweise 2 ms und für die Raumzeigermodulation beispielsweise 0,1 ms bis 0,3 ms. Durch die Verarbeitung der Korrektur im Raumzeigermodulator 26 mit Pulsfrequenz, erhält man eine wesentlich bessere Kompensation der vom Pulswechselrichter erzeugten Fehlerspannungen.

Die Figuren 8 und 9 zeigen jeweils einen zeitlichen Stromverlauf in einem Strang R der Induktionsmaschine bei 458 U/min (ein Viertel der Nenndrehzahl), wobei der Motor mit 25 Nm etwa ein Fünftel seines Nennmoments liefert. Beim Stromverlauf $i_R$ gemäß Figur 8 werden die Korrekturen des Fehlerspannungszeigers im feldorientierten d,q-Koordinatensystem der Regelung durchgeführt. Im Vergleich zum Stromverlauf $i_R$ gemäß Figur 1 liefert die Korrektur im feldorientierten Koordinatensystem bereits eine sehr gute Sinuskurve. Beim Stromverlauf $i_R$ gemäß Figur 9 wurde die Korrektur in der symmetrischen Raumzeigermodulation vorgenommen. Die Kurvenform zeigt gegenüber der Kurvenform nach Figur 8 noch einmal eine deutliche Verbesserung beim Nulldurchgang. Bei der Berechnung des Fehlerspannungszeigers $\underline{u}_{Fehler2}$ werden auch anstelle des Läuferflußwinkels $\gamma_S$, ein extrapolierter Läuferwinkel $\gamma_{1,ext}$ verwendet. Dieser extrapolierte Läuferwinkel $\gamma_{1,ext}$ ergibt sich aus dem Läuferwinkel $\gamma_s$ und einer Totzeit $t_T$ des verwendeten Prozessors, die mit der Läuferfrequenz $\omega_s$ multipliziert wird. Somit wird nicht der aktuelle Läuferflußwinkel $\gamma_s$ verwendet, sondern der Läuferflußwinkel $\gamma_s$ wird in die Zukunft extrapoliert, wodurch die Totzeit $t_T$ der Regelung ausgeglichen wird.

**Patentansprüche**

1. Verfahren zur Kompensation einer Fehlerspannung ($U_{Fehler2}$) eines eine Induktionsmaschine speisenden Pulswechselrichters, wobei diese Fehlerspannung ($U_{Fehler2}$) auf eine Verriegelungszeit ($t_V$) und auf Durchlaßspannungen ($U_f$) von Stromrichterventilen dieses Pulswechselrichters zurückzuführen ist, mit folgenden Verfahrensschritten:

a) Bestimmung eines Lastwinkels ($\varepsilon_i$) eines vorgebbaren Sollstrom-Raumzeigers ($\underline{i}^*_s$) der Induktionsmaschine mittels seiner feldorientierten Stromkomponenten ($i^*_d$, $i^*_q$),
b) Bestimmung eines Stromsektors, in dem sich dieser Sollstrom-Raumzeiger ($\underline{i}^*_s$) der Induktionsmaschine sich gerade befindet, mittels des zuvor berechneten Lastwinkels ($\varepsilon_i$),
c) Bestimmung des Winkels ($\varepsilon_{UF}$) des Fehlerspannungszeigers ($\underline{U}_{Fehler2}$) in läuferflußfesten Polarkoordinaten mittels des zuvor bestimmten Stromsektors und eines Läuferflußwinkels ($\gamma_s$) des magnetischen Flusses in der Induktionsmaschine,
d) Bestimmung des Betrags ($U_{KLF}$) des Fehlerspannungszeigers ($\underline{U}_{Fehler2}$) aus Parametern ($t_V$, $T_P$, $U_{ZK}$, $U_f$) des Wechselrichters,
e) Bestimmung der feldorientierten Komponenten ($U_d$, $U_q$) des Fehlerspannungszeigers ($\underline{U}_{Fehler2}$) mittels des zuvor berechneten Winkels ($\varepsilon_{UF}$) und des Betrags ($U_{KLF}$) und
f) komponentenweise Addition des Fehlerspannungszeigers ($\underline{U}_{Fehler2}$) zum Sollspannungs-Raumzeiger ($\underline{u}^*_s$).

2. Verfahren zur Kompensation einer Fehlerspannung ($U_{Fehler2}$) eines eine Induktionsmaschine speisenden Pulswechselrichters, wobei diese Fehlerspannung ($U_{Fehler2}$) auf eine Verriegelungszeit ($t_V$) und auf Durchlaßspannungen ($U_f$) von Stromrichterventilen dieses Pulswechselrichters zurückzuführen ist, mit folgenden Verfahrensschritten:

a) Bestimmung eines Lastwinkels ($\varepsilon^*_i$) eines Sollstrom-Raumzeigers ($\underline{i}^*_s$) der Induktionsmaschine mittels seiner vorgebbaren feldorientierten Stromkomponenten ($i^*_d$, $i^*_q$),
b) Bestimmung des Betrags ($U_{comp.}$) des Fehlerspannungszeigers ($\underline{U}_{Fehler2}$) aus Parametern ($t_V$, $T_P$, $U_{ZK}$, $U_f$) des Wechselrichters,
c) Bestimmung eines Winkels ($\alpha^*_i$) des Sollstrom-Raumzeigers ($\underline{i}^*_s$) im ständerfesten Polarkoordinatensystem mittels des zuvor berechneten Lastwinkels ($\varepsilon^*_i$) und eines Läuferflußwinkels ($\gamma_s$) des magnetischen Flusses in der Induktionsmaschine,
d) Bestimmung eines Stromsektors, in dem sich der Sollstrom-Raumzeiger ($\underline{i}^*_s$) der Induktionsmaschine gerade befindet, mittels des zuvor bestimmten Winkels ($\alpha^*_i$) des Sollstrom-Raumzeigers ($\underline{i}^*_s$),
e) Bestimmung der Änderungen ($\Delta G_R$, $\Delta G_S$, $\Delta G_T$) der Schaltgrenzen ($G_R$, $G_S$, $G_T$) einer symmetrischen Raumzeigermodulation mittels des zuvor bestimmten Stromsektors und des Betrags ($U_{comp.}$) und
f) paarweise Addition der berechneten Schaltgrenzänderungen ($\Delta G_R$, $\Delta G_S$, $\Delta G_T$) zu den berechneten Pulsdauern.

3. Verfahren nach Anspruch 1, **dadurch gekennzeichnet,** daß bei der Bestimmung des Winkels ($\varepsilon_{UF}$) des Fehlerspannungszeigers ($\underline{U}_{Fehler2}$) ein um eine Totzeit ($t_T$) extrapolierter Läuferflußwinkel ($\gamma_{1,ext}$) verwendet wird.

4. Verfahren nach Anspruch 1 oder 2, **dadurch gekenzeichnet,** daß zum Lastwinkel ($\varepsilon^*_i$) ein um eine Totzeit ($t_T$) extrapolierter Läuferflußwinkel ($\gamma_{1,ext}$) addiert wird.

5. Vorrichtung zur Durchführung des Verfahrens nach Anspruch 1 mit einer feldorientierten Regelung für einen eine Induktionsmaschine speisenden Pulswechselrichter, wobei eine flußbildende Stromkomponente ($i_d$) und eine drehmomentbildende Stromkomponente ($i_q$) eines ermittelten Iststrom-Raumzeigers ($\underline{i}_1$) jeweils auf eine gewünschte Stromkomponente ($i^*_d$, $i^*_q$) eines Sollstrom-Raumzeigers ($\underline{i}^*_s$) geregelt werden, wobei jeweils eine Regler-Stellgröße ($\Delta u_d$, $\Delta u_q$) mit einer Vorsteuergröße ($u^*_d$, $u^*_q$) eines Vorsteuernetzwerkes (20) überlagert wird, **dadurch gekennzeichnet,** daß eine Rechenschaltung (34) vorgesehen ist, der eingangsseitig die Komponenten ($i^*_d$, $i^*_q$) des Sollstrom-Raumzeigers ($\underline{i}^*_s$), der Wert einer Eingangsspannung ($U_{ZK}$ bzw. $U_{batt}$) des Pulswechselrichters und ein Wert einer Ständerfrequenz ($\omega_s$) der Induktionsmaschine zugeführt sind, und die ausgangsseitig mit den Ausgängen des Vorsteuernetzwerkes (20) verknüpft sind.

6. Vorrichtung zur Durchführung des Verfahrens nach Anspruch 2 mit einer feldorientierten Regelung und einem Raumzeigermodulator (26) für einen eine Induktionsmaschine speisenden Pulswechselrichter, **dadurch gekennzeichnet,** daß eine Rechenschaltung (34) vorgesehen ist, der eingangsseitig die Komponenten ($i^*_d$, $i^*_q$) eines Sollstrom-Raumzeigers ($\underline{i}^*_s$) der feldorientierten Regelung, der Wert einer Eingangsgröße ($U_{ZK}$, $U_{batt}$) des Pulswechselrichters und ein Wert einer Ständerfrequenz ($\omega_s$) der Induktionsmaschine zugeführt sind, und die ausgangsseitig mit dem Raumzeigermodulator (26) verknüpft ist.

7. Vorrichtung nach Anspruch 5, **dadurch gekennzeichnet,** daß die Rechenschaltung (34) Bestandteil der feldorientierten Regelung ist.

8. Vorrichtung nach Anspruch 6, **dadurch gekennzeichnet,** daß die Rechenschaltung (34) Bestandteil des Raumzeigermodulators (26) ist.

## Claims

1. Method for compensating a fault voltage ($U_{Fehler2}$) of a pulse-controlled inverter which supplies an induction machine, wherein this fault voltage ($U_{Fehler2}$) is to be traced back to an interlock time ($t_V$) and to on-state voltages ($U_f$) of converter valves of this pulse-controlled inverter, said method having the following method steps:

    a) determination of a load angle ($\varepsilon_i$) of a predeterminable desired-current space vector ($\underline{i}^*_s$) of the induction machine by means of its field-oriented current components ($i^*_d$, $i^*_q$);
    b) determination of a current sector, in which this desired-current space vector ($\underline{i}^*_s$) of the induction machine is straight, by means of the previously calculated load angle ($\varepsilon_i$);
    c) determination of the angle ($\varepsilon_{UF}$) of the fault voltage vector ($U_{Fehler2}$) in rotor-flux-fixed polar coordinates by means of the previously determined current sector and a rotor-flux angle ($\gamma_s$) of the magnetic flux in the induction machine;
    d) determination of the amount ($U_{KLF}$) of the fault voltage vector ($U_{Fehler2}$) from parameters ($t_V$, $T_P$, $U_{ZK}$, $U_f$) of the inverter;
    e) determination of the field-oriented components ($U_d$, $U_q$) of the fault voltage vector ($U_{Fehler2}$) by means of the previously calculated angle ($\varepsilon_{UF}$) and the amount ($U_{KLF}$); and
    f) component-wise addition of the fault voltage vector ($U_{Fehler2}$) to the desired-voltage space vector ($\underline{u}^*_s$).

2. Method for compensating a fault voltage ($U_{Fehler2}$) of a pulse-controlled inverter which supplies an induction machine, wherein this fault voltage ($U_{Fehler2}$) is to be traced back to an interlock time ($t_V$) and to on-state voltages ($U_f$) of converter valves of this pulse-controlled inverter, said method having the following method steps:

    a) determination of a load angle ($\varepsilon^*_i$) of a desired-current space vector ($\underline{i}^*_s$) of the induction machine by means of its predeterminable field-oriented current components ($i^*_d$, $i^*_q$);
    b) determination of the amount ($U_{comp.}$) of the fault voltage vector ($U_{Fehler2}$) from parameters ($t_V$, $T_P$, $U_{ZK}$, $U_f$)

of the inverter;

c) determination of an angle ($\alpha^{*}_i$) of the desired-current space vector ($\underline{i}^{*}_s$) in the stator-fixed polar coordinate system by means of the previously calculated load angle ($\varepsilon^{*}_i$) and a rotor-flux angle ($\gamma_s$) of the magnetic flux in the induction machine;

d) determination of a current sector, in which the desired-current space vector ($\underline{i}^{*}_s$) of the induction machine is straight, by means of the previously determined angle ($\alpha^{*}_i$) of the desired-current space vector ($\underline{i}^{*}_s$);

e) determination of the changes ($\Delta G_R$, $\Delta G_S$, $\Delta G_T$) in the switching limits ($G_R$, $G_S$, $G_T$) of a symmetrical space-vector modulation by means of the previously determined current sector and the amount ($U_{comp.}$); and

f) addition in pairs of the calculated switching-limit changes ($\Delta G_R$, $\Delta G_S$, $\Delta G_T$) to the calculated pulse durations.

3.  Method according to claim 1, characterised in that in the case of the determination of the angle ($\varepsilon_{UF}$) of the fault voltage vector ($U_{Fehler2}$), a rotor-flux angle ($\gamma_{1,ext}$) which is extrapolated around a dead time ($t_T$) is used.

4.  Method according to claim 1 or 2, characterised in that a rotor-flux angle ($\gamma_{1,ext}$) which is extrapolated around a dead time ($t_T$) is added to the load angle ($\varepsilon^{*}_i$).

5.  Device for carrying out the method according to claim 1, having a field-oriented control for a pulse-controlled inverter which supplies an induction machine, wherein a flux-forming current component ($i_d$) and a torque-forming current component ($i_q$) of an established actual-current space vector ($\underline{i}_1$) are each regulated to a desired current component ($i^{*}_d$, $i^{*}_q$) of a desired-current space vector ($\underline{i}^{*}_s$), wherein in each case a controller manipulated variable ($\Delta u_d$, $\Delta u_q$) is superimposed with a pilot control variable ($u^{*}_d$, $u^{*}_q$) of a pilot control network (20), characterised in that there is provided a computing circuit (34), to the input side of which are supplied the components ($i^{*}_d$, $i^{*}_q$) of the desired-current space vector ($\underline{i}^{*}_s$), the value of an input voltage ($U_{ZK}$ and $U_{batt}$ respectively) of the pulse-controlled inverter and a value of a stator frequency ($\omega_s$) of the induction machine, and which are connected on the output side to the outputs of the pilot control network (20).

6.  Device for carrying out the method according to claim 2, having a field-oriented control and a space-vector modulator (26) for a pulse-controlled inverter which supplies an induction machine, characterised in that there is provided a computing circuit (34), to the input side of which are supplied the components ($i^{*}_d$, $i^{*}_q$) of a desired-current space vector ($\underline{i}^{*}_s$) of the field-oriented control, the value of an input voltage ($U_{ZK}$, $U_{batt}$) of the pulse-controlled inverter and a value of a stator frequency ($\omega_s$) of the induction machine, and which computing circuit is connected on the output side to the space-vector modulator (26).

7.  Device according to claim 5, characterised in that the computing circuit (34) is a component of the field-oriented control.

8.  Device according to claim 6, characterised in that the computing circuit (34) is a component of the space-vector modulator (26).

## Revendications

1.  Procédé de compensation d'une tension de défaut ($U_{défaut}2$) d'un onduleur à impulsions alimentant une machine à induction, cette tension de défaut ($U_{défaut2}$) étant due à un temps de verrouillage ($t_v$) et à des tensions directes ($U_f$) de valves de convertisseur de cet onduleur à impulsions, ayant les étapes suivantes :

a) Détermination d'un angle de charge ($\varepsilon_i$) d'un vecteur spatial ($\underline{i}^{*}_s$) de courant de consigne, qui peut être prescrit, de la machine à induction, au moyen de ses composantes de courant ($i^{*}_d$, $i^{*}_q$) rapportées au champ,
b) Détermination d'un secteur de courant dans lequel se trouve justement ce vecteur spatial de courant de consigne ($\underline{i}^{*}_s$) de la machine à induction, au moyen de l'angle de charge ($\varepsilon_i$) calculé précédemment,
c) Détermination de l'angle ($\varepsilon_{UF}$) du vecteur de tension de défaut ($\underline{U}_{défaut}2$) dans le système de coordonnées polaires se rapportant au flux de rotor, au moyen du secteur de courant déterminé précédemment et au moyen d'un angle de flux de rotor ($\gamma_s$) du flux magnétique dans la machine à induction,
d) Détermination du module $U_{KLF}$) du vecteur de tension de défaut ($\underline{U}_{défaut2}$) à partir de paramètres ($t_V$, $T_P$, $U_{ZK}$, $U_f$) de l'onduleur,
e) Détermination des composantes se rapportant au champ ($U_d$, $U_q$) du vecteur de tension de défaut ($\underline{U}_{défaut2}$) au moyen de l'angle ($\varepsilon_{UF}$) calculé précédemment et du module ($UKLF$), et
f) Addition, en composantes, du vecteur de tension de défaut ($\underline{U}_{défaut2}$) au vecteur spatial de tension de con-

signe ($\underline{u}^{*}{}_{s}$).

2. Procédé de compensation d'une tension de défaut ($U_{défaut2}$) d'un onduleur à impulsions alimentant une machine à induction, cette tension de défaut ($U_{défaut2}$) étant due à un temps de verrouillage (tv) et à des tensions directes ($U_{f}$) de valves de convertisseur de cet onduleur à impulsions, ayant les étapes suivantes :

a) Détermination d'un angle de charge ($\varepsilon^{*}{}_{i}$) d'un vecteur spatial de courant de consigne ($\underline{i}^{*}{}_{s}$) de la machine à induction, au moyen de ses composantes de courant ($i^{*}{}_{d}$, $i^{*}{}_{q}$) rapportées au champ et pouvant être prescrites,
b) Détermination du module ($U_{comp.}$) du vecteur de tension de défaut ($\underline{U}_{défaut2}$) à partir de paramètres ($t_{V}$, $T_{P}$, $U_{ZK}$, $U_{f}$) de l'onduleur,
c) Détermination d'un angle ($\alpha^{*}{}_{i}$) du vecteur spatial de courant de consigne ($\underline{i}^{*}{}_{s}$) dans le système de coordonnées polaires se rapportant au stator, au moyen de l'angle de charge ($\varepsilon^{*}{}_{i}$) calculé précédemment et au moyen d'un angle de flux de rotor ($\gamma_{s}$) du flux magnétique dans la machine à induction,
d) Détermination d'un secteur de courant dans lequel se trouve justement le vecteur spatial de courant de consigne ($\underline{i}^{*}{}_{s}$) de la machine à induction, au moyen de l'angle ($\alpha^{*}{}_{i}$) déterminé précédemment du vecteur spatial de courant de consigne ($\underline{i}^{*}{}_{s}$),
e) Détermination des modifications ($\Delta_{G_{R}}$, $\Delta_{G_{S}}$, $\Delta_{G_{T}}$) des limites de commutation ($G_{R}$, $G_{S}$, $G_{T}$) d'une modulation symétrique de vecteur spatial, au moyen du secteur de courant déterminé précédemment et au moyen du module ($U_{comp.}$), et
f) Addition, par paire, des modifications calculées des limites de commutation ($\Delta G_{R}$, $\Delta G_{S}$, $\Delta G_{T}$) aux durées calculées d'impulsions.

3. Procédé selon la revendication 1, caractérisé par le fait que, lors de la détermination de l'angle ($\varepsilon_{UF}$) du vecteur de tension de défaut ($U_{défaut}2$), on utilise un angle de flux de rotor ($\gamma_{1,ext}$) extrapolé d'un temps de mort ($t_{T}$).

4. Procédé selon la revendication 1 ou 2, caractérisé par le fait que l'on additionne à l'angle de charge ($\varepsilon^{*}{}_{i}$) un angle de flux de rotor ($\gamma_{1,ext}$) extrapolé d'un temps de retard ($t_{T}$).

5. Dispositif pour la mise en oeuvre du procédé selon la revendication 1 ayant une régulation se rapportant au champ pour un onduleur à impulsions alimentant une machine à induction, dans lequel une composante de courant ($i_{d}$) formant le flux et une composante de courant ($i_{q}$) formant le couple d'un vecteur spatial de courant réel ($\underline{i}_{1}$) déterminé sont réglées respectivement sur une composante de courant ($i^{*}{}_{d}$, $i^{*}{}_{q}$) souhaitée d'un vecteur spatial de courant de consigne ($\underline{i}^{*}{}_{s}$), dans lequel une grandeur réglante de régulateur ($\Delta u_{d}$, $\Delta u_{q}$) est superposée à une grandeur de commande pilote ($u^{*}{}_{d}$, $u^{*}{}_{q}$) d'un réseau de commande pilote (20), caractérisé par le fait que l'on prévoit un circuit de calcul (34) auquel sont envoyées en entrée les composantes ($i^{*}{}_{d}$, $i^{*}{}_{q}$) du vecteur spatial de courant de consigne ($\underline{i}^{*}{}_{s}$), la valeur d'une tension d'entrée ($U_{ZK}$ ou $U_{batt}$) de l'onduleur à impulsions et une valeur d'une fréquence de stator ($\omega_{s}$) de la machine à induction, et lequel est relié en sortie aux sorties du réseau de commande pilote (20).

6. Dispositif pour la mise en oeuvre du procédé selon la revendication 2, ayant une régulation se rapportant au champ et un modulateur de vecteur spatial (26) pour un onduleur à impulsions alimentant une machine à induction, caractérisé par le fait que l'on prévoit un circuit de calcul (34) auquel sont envoyées en entrée les composantes ($i^{*}{}_{d}$, $i^{*}{}_{q}$) d'un vecteur spatial de courant de consigne ($\underline{i}^{*}{}_{s}$) de la régulation se rapportant au champ, la valeur d'une grandeur d'entrée ($U_{ZK}$, $U_{batt}$) de l'onduleur à impulsions et une valeur d'une fréquence de stator ($\omega_{s}$) de la machine à induction, et lequel est relié en sortie au modulateur de vecteur spatial (26).

7. Dispositif selon la revendication 5, caractérisé par le fait que le circuit de calcul (34) fait partie de la régulation se rapportant au champ.

8. Dispositif selon la revendication 6, caractérisé par le fait que le circuit de calcul (34) fait partie du modulateur de vecteur spatial (26).

FIG 1

FIG 8

FIG 9

FIG 2

$U_{Th}$
Spannungsabfall
am Ventil Th1

$t_{on}$

$t_{off}$

$T_p = t_{on} + t_{off}$

$U_{KI1}$

$U_{ZK}$

t

$t_v$
Verriegelungszeit

$U_D$
Spannungsabfall
an der Diode D4

FIG 3

$U_D$
Spannungsabfall
an der Diode D1

$t_{on}$

$t_{off}$

$T_p = t_{on} + t_{off}$

$U_{KI1}$

$U_{ZK}$

t

$t_v$
Verriegelungszeit

$U_{Th}$
Spannungsabfall
am Ventil Th4

FIG 4

FIG 5

**FIG 6**

SVM

**Strommessung**
**Phase A(R), B(S)**

**Winkelintegrator**
$Y_s = Y_s + \Delta Y_s$

**Berechnung des Strom-Sollwinkels**
$\alpha_i^* = \varepsilon_i^* + Y_s$

**Ermittlung des Stromsektors**
$\text{Stromsektor} = \text{abs} \dfrac{\alpha_i^* + \pi/6}{\pi/3}$

**Tabelle: Stromsektor**

**Berechnung des Spannungs-Sollwinkels**
$\alpha_u^* = \varepsilon_u^* + Y_s$

**Ermittlung des Spannungssektor**

$\text{Spg.-Sektor} = \text{abs} \dfrac{\alpha_u^*}{\pi/3} + 1$

$\alpha_{sec} = \alpha_u^* - (\text{Spg.-Sektor} - 1) \cdot \pi/3$

**Berechnung der Schaltzeiten**
**t0, t1 und t2**

**Begrenzung der Schaltzeiten**

**Takt 4: Spannungssektor**

PWMA+ = PWMA+ +ΔPWMA+
PWMB+ = PWMB+ +ΔPWMB+
PWMC+ = PWMC+ +ΔPWMC+

**Laden in das PWM-Register**

## FIG 7